# EUROPEAN PATENT APPLICATION

(11) **EP 3 367 223 A1**
(43) Date of publication of application: **29.08.2018**
(21) Application number: 16806574.6
(22) Date of filing: 01.04.2016
(51) Int. Cl.: G06F 3/048

(54) **METHOD AND APPARATUS FOR CONTROLLING MEDIA PRESENTATION, AND TERMINAL**

(30) Priority: 25.11.2015 CN 201510829732
(71) Applicant: ZTE Corporation, Shenzhen, Guangdong 518057 (CN)
(72) Inventor: LI, Zhao, Shenzhen Guangdong 518057 (CN); LIU, Yan, Shenzhen Guangdong 518057 (CN)
(74) Representative: HGF Limited
(86) International application number: PCT/CN2016/078375
(87) International publication number: WO 2016/197676

(57) **Abstract**

Provided are a method, an apparatus and a system for controlling media presentation, the method includes: detecting pressure value acting on a touch device (S201); and determining the presentation position change amount of a media according to the detected pressure value (S202). Further disclosed are an apparatus and a system for controlling media presentation. With the above scheme, by detecting the pressure value acting on a touch device and determining the browsing amount of a media according to the detected pressure value, the presentation position of the media can be conveniently controlled by touch actions with different strengths, without additional operations on the scroll bar, the play progress bar, etc., and without a large number of touches by a user.

## Description

### Technical Field

The disclosure relates, but is not limited to, the field of terminal devices, and relates to a method and apparatus for controlling media presentation.

### Background

With the development of science and technology, more and more electronic terminal devices have the functions of media presentation, such as e-book reading, electronic photo browsing, web page viewing, video watching, instant message checking, and social communication information viewing. With the development of technology, the number of terminal devices, typically such as e-book terminals, that are specifically used for media presentation will also increase. However, in known media presentation, the manner of controlling the presentation position change is relatively simple. For example, when a document, a picture, or a video is viewed, a change in the presentation position is generally controlled by operating a scroll bar or a play progress bar. If there is a large position change amount, it is needed to drag the scroll bar or the play progress bar within a large range, or to switch to a special page to operate. When flipping through an e-book, pages can be turned by touching the screen. However, when the number of turned pages is large, it is needed to touch the screen too many times, which is inconvenient to use and results in poor user experience.

### Summary

The following is a brief summary of subject matter that is described in greater detail herein. The summary is not intended to be limiting as to the scope of the claims.

Embodiments of the present invention provide a method and an apparatus for controlling media presentation, to conveniently control the presentation position change amount of a media.

An embodiment of the present invention provides a method for controlling a media presentation position, including:
detecting a pressure value acting on a touch device; and
determining a presentation position change amount of a media according to the detected pressure value.

An embodiment of the present invention provides an apparatus for controlling media presentation, including:
a pressure collecting module, configured to detect a pressure value acting on a touch device; and
a position amount determining module, configured to determine a presentation position change amount of a media according to the detected pressure value.

An embodiment of the present invention further provides a computer readable storage medium storing computer-executable instructions, which, when executed, implement a method for controlling media presentation.

According to the above scheme, by detecting the pressure value acting on a touch device and determining the browsing amount of a media according to the detected pressure value, the presentation position change of the media can be conveniently controlled by touch actions with different strengths, without additional operations on the scroll bar, the play progress bar, etc., and without a large number of touches by a user.

Other aspects will be appreciated upon reading and understanding the attached figures and detailed description.

### Brief Description of Drawings

In order to more clearly describe the technical solutions in embodiments of the present invention, the drawings used for the specification will be briefly described below. Obviously, the drawings for the following description are merely some embodiments of the present invention. For those skilled in the art, other drawings may also be obtained according to the drawings without any creative work.
FIG. 1 is a structural block diagram of a hardware operating environment according to an embodiment of the present invention.
FIG. 2 is a flowchart of a method for controlling media presentation according to an embodiment of the present invention.
FIG. 3 is a schematic diagram of a correspondence between pressure value intervals and media presentation position change amounts according to an embodiment of the present invention.
FIG. 4 is a schematic diagram of a correspondence between pressure values and media presentation position changes according to an embodiment of the present invention.
FIG. 5 is a schematic diagram of integration of media presentation position change speed over time according to an embodiment of the present invention.
FIG. 6 is a schematic diagram of integration of media presentation position change speed over time according to an embodiment of the present invention.
FIG. 7 is a schematic diagram of a pressure acting direction according to an embodiment of the present invention.
FIG. 8 is a schematic diagram of a pressure action region according to an embodiment of the present invention.
FIG. 9 is a structural block diagram of an apparatus according to another embodiment of the present invention.
FIG. 10 is a schematic diagram of an apparatus for controlling media presentation according to another embodiment of the present invention.
FIG. 11 is a schematic diagram of an apparatus for controlling media presentation according to another embodiment of the present invention.
FIG. 12 is a flowchart of a method for controlling media presentation according to another embodiment of the present invention.

### Detailed Description

The schemes in the embodiments of the present invention will be described clearly and completely below in connection with the drawings, and it will be apparent that the embodiments described herein are merely part of the present application, not all of the embodiments of the present application. All other embodiments obtained by an ordinary skilled in the art based on the embodiments of the present application without creative efforts shall fall in the protection scope of the present invention.

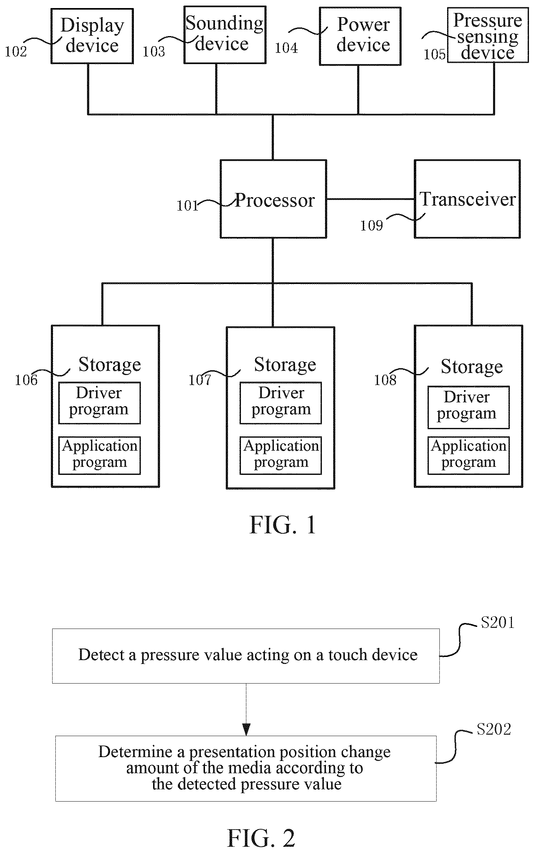

Reference could be made to FIG. 1 which is a structural block diagram of a hardware operating environment according to an embodiment of the present invention.

The operating environment may include a central processor 101 configured to run computer instructions and process data in computer software.

The operating environment may further include a storage 106, and may further include a storage 107 and a storage 108, and the storages 106 to 108 are configured to store programs and various data. The number of storages herein is not limited, and may be one or more, and the storages may be integrated in other devices in various ways as long as the communication with the CPU 101 can be achieved. Each storage may include a driver module and an application module, respectively, for enabling a computer to communicate with a device and perform one or more specific tasks.

The operating environment may further include a display device 102, a sounding device 103, a power device 104, and a pressure sensing device 105. The display device 102 and the sounding device 103 are not necessarily equipped at the same time. Instead, the display device 102 and the sounding device 103 are equipped according to the requirements of the embodiments of the present invention. For example, in an embodiment where no sound is used to prompt a presentation position change amount, the sound device 103 may not be equipped. In addition, the pressure sensing device 105 may be separately provided or integrated in a device such as the display device 102. For example, for a mobile communication terminal or a flat panel display device using a touch screen, the pressure sensing device 105 is integrated in the touch screen. The hardware operating environment may further include a transceiver 109 configured to transmit data over a certain communication network, which may be a wired network or a wireless network. Herein, in a case where network communication is not necessary, the transceiver 109 may not be equipped.

Here, the operating environment may further include other external devices.

The above hardware operating environment can be set in a terminal device. In the embodiments of the present invention, the term "terminal device" refers to a device used by a user for media presentation, such as a mobile communication terminal, a mobile computer, a flat panel display, and a fixed display terminal. The terminal device may be a device or a combination of several devices. For example, when a control device is separated from a display device, the terminal device refers to a combination of both the control device and the display device. At present, the terminal device is mainly based on but not limited to electronic technology. Devices that are realized by other technologies and are used by users for media presentation also belong to the "terminal device" in the present application.

Reference could be made to FIG. 2 which is a flowchart of a method for controlling media presentation according to an embodiment of the present invention. As shown in FIG. 2, the method includes the following steps.

In Step S201, a pressure value acting on the touch device is detected.

In the embodiment, the detected pressure value may be a pressure value acting on the touch device by a user, and may further be a pressure value generated by other devices that can be sensed by the touch device acting on the touch device. In embodiments of the present invention, the scheme of the present application is described by taking a user as an example, and the scheme of the present application also applies to the case where other devices act on the touch device to generate the pressure value.

In the embodiments of the present invention, the term "media" refers to a medium used for information exchange between people and devices, such as a text, a sound, an image, and a video, which may be referred to as a basic media element. In addition, the media further includes a specific application form that carries one or more basic media elements, such as a document, an e-book, a web page, an instant message, and social communication information (for example, information generated during social contacts using an application platform such as WeChat). Although the connotations of the two types of media mentioned above are not exactly the same, as long as the two types of media act as a medium for information exchange between people and devices, the two types of media all belong to the "media" of the embodiments of the present invention.

In the embodiments of the present invention, the term "e-book" refers to a document that can be read on a terminal device and appears in the form of a book. The e-book can be applied not only to an e-book terminal but also to any terminal device. The e-book terminal herein refers to a terminal device using computer technology to digitally record certain information such as texts, pictures, sounds and images into a device which uses an optical, electrical or magnetic medium, and read, copy and transmit the information by means of a specific device.

In the embodiments of the present invention, the term "presentation" refers to a presentation of the media to a user by means of playing, displaying and etc. Due to the different types of media, presentation manners of the different types of media will be different. For example, when the media is an e-book, the presentation manner is to display the pages of the e-book for a user to read; when the media is a picture, the presentation manner is to display a picture or picture list for the user to view; when the media is a video, the presentation manner is to play the video or display a video list for the user to view; when the media is a document, a web page, an instant message, or social communication information, the presentation manner is to display the content of the web page, the instant message, or the social communication information for the user to browse and read; when the media is PowerPoint or other materials to be presented, the presentation manner is to display or play a specific page of the material to be presented; when the media is an audio, the presentation manner is to play the audio for the user. The above and other unmentioned media presentation manners are all included in the scope of the "presentation".

In the embodiments of the present invention, the term "touch device" refers to a device that receives a user's touch signal, such as a touch screen of a mobile terminal, a touch screen of a flat panel display, a dedicated touch area set on a mobile computer, and the like. The touch device may be integrated with other devices such as a screen, or may be set separately. The touch device may be set on the terminal device, or may be set separately from the terminal device and communicate with the terminal device in a certain communication manner. The touch device and the terminal device may be in a wired connection or in a wireless connection.

In the embodiments of the present invention, the term "presentation position change" refers to a change of a specific part of the media currently presented to the user, and the term "display position change amount" refers to any suitable amount which can be used for specifically describing such change range or size. For example, when the media is an e-book, the presentation position change refers to a change in the current reading page, and the presentation position change amount may be the number of turned pages of the e-book. When the media is a document, a web page, an instant message, or social communication information, the presentation position change refers to a change in the current reading position, and the presentation position change amount may refers to an information amount skipped over when viewing forward or backward one of the document, the web page, the instant message, and the social communication information. When the media is an audio or video, the presentation position change refers to a change in the current playing portion, and the presentation position change amount may be a forward or backward amount of the video or audio. When the media is a picture, the presentation position change refers to a change in the currently displaying picture, and the presentation position change amount may be the number of pictures skipped over when viewing forward or backward pictures.

In the present embodiment, the user may apply a touch pressure to the touch device in many ways, which typically include, for example, a finger touch and a touch pen touch and also include other ways and the embodiments of the present invention are not limited thereto. There are also various touch manners, such as point-touch and sliding, and the sliding includes a sliding with an inconsistent strength (for example, a common finger sliding motion, which has the highest contact strength at the beginning) and a sliding with a substantially consistent strength (for example, keeping the strength to slide for a trajectory on the touch device).

In the present embodiment, the pressure value of the user acting on the touch device may be detected in various ways. The pressure value may be detected by a related pressure sensor arranged on the touch screen. In that case, a pressure value will be converted to an electrical signal value, and then the converted electrical signal will be input to a corresponding processing device to identify the pressure value and perform a related operation. It should be noted that the pressure may also be detected by using other methods and technologies that appear in the future. The pressure value may also be converted by using another signal form such as an electrical signal, a heat signal, an optical signal, or a magnetic signal to facilitate identification. The embodiments of the present invention are not limited thereto.

In the present embodiment, when the user acts on the touch device of a device, the magnitude of strength applied by the user may be detected by a pressure sensor provided on the touch device. In step S201, the detection includes real-time detection and non-real-time detection, herein real-time detection means that the latest pressure value is always detected as long as the pressure termination signal is not received. In that case, the media presentation position amount is determined according to the detected latest pressure value or determined according to the detected latest pressure value in combination with the previously detected pressure values. Non-real-time detection means that the pressure value is detected only once, and if the subsequent pressure value changes, the change in the subsequent pressure value is no longer detected. In that case, the media presentation position change amount is determined only based on the detected pressure value, and changes in subsequent pressure values will not cause changes in the number of turned pages of picture-text.

In step S202, a presentation position change amount of the media is determined according to the detected pressure value.

In the present embodiment, the media presentation position is changed based on the fact that different pressure values acting on the touch device by the user correspond to different media presentation position change amounts. Here, the method for the correspondence between pressure values and media presentation position change amounts can be achieved by setting the pressure values into different levels, i.e., dividing all possible pressure values into several intervals, and different pressure intervals correspond to different presentation position change amounts. The method also may be achieved without setting the pressure values into different levels, as long as there is a change in the pressure value, the pressure values correspond to different media presentation position change amounts. All the possible pressure values herein refer to all the pressure values between the maximum pressure and the minimum pressure (i.e., 0) that the user can normally act on the touch device, or there may be no ceiling, i.e., the maximum pressure value has no upper limit.

In one embodiment, the presentation position change amount determined according to the above method is displayed to the user or voice-played to the user. The display herein may include real-time display and non-real-time display. The real-time display means that when the presentation position change amount changes, the display value also changes. The non-real-time display means that when the presentation position change amount changes, the display value does not necessarily change accordingly, and the presentation position change amount may be displayed only after the presentation position change amount becomes relatively stable or other conditions are satisfied. Taking an e-book as an example, when a user applies a pressure on a touch device such as a touch screen, the number of turned page determined according to the pressure value may be displayed in an appropriate position on the display screen, for example, "5 pages", "10 pages", etc. displayed next to the user's finger, thus it is convenient for the user to understand how many pages the user can turn over at one time with the applied strength. In addition, the number of turned pages can also be broadcast to the user by voice to adapt to different user preferences.

In one embodiment, when it is detected that the user's pressure acting on the touch device disappears, a new presentation position of the media is determined according to the presentation position change amount. Taking an e-book as an example, the user may use a finger or a touch pen to apply a touch pressure to the e-book. When the user's finger or the touch pen is removed, the number of pages to be turned may be determined according to the final number of turned pages and then the user can turn the e-book to the corresponding page.

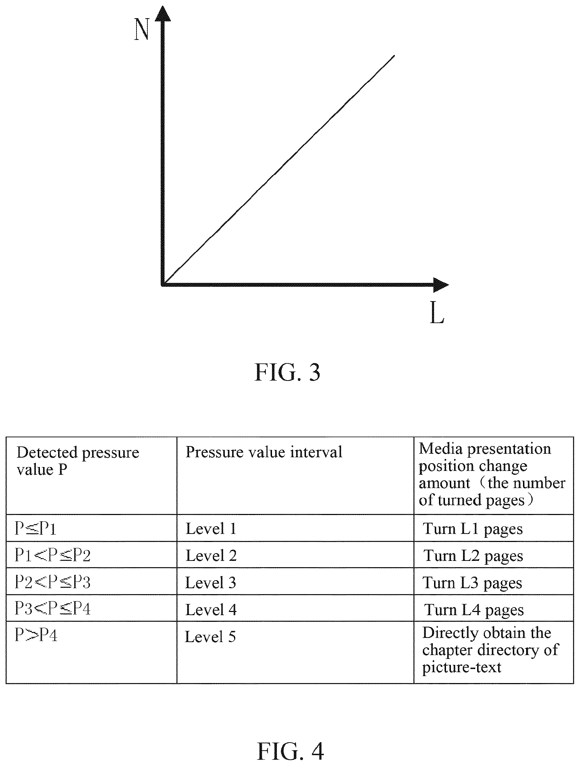

Reference could be made to FIG. 3 which is a schematic diagram of a correspondence between pressure value intervals and media presentation position change amounts according to an embodiment of the present invention. In the schematic diagram, taking the page turning of an e-book as an example, that is, the media presentation position change amount is specifically the number of turned pages of the e-book. The pressure value intervals are determined according to different pressure value ranges. For convenience of description, we can set the pressure value intervals into different pressure levels. As shown in the schematic diagram, the actual detected pressure values are denoted by P, and P1, P2, P3, P4,... PN are the demarcation points of the pressure value intervals, where the pressure increases from P1 to PN, and one pressure value interval corresponds to one pressure level. There are totally five pressure levels provided in the present embodiment. The page turning speeds corresponding to different pressure levels (e.g., representing the number of turned pages corresponding to each pressing) are denoted by L, and L1, L2, L3, L4,... LN indicate page turning speeds at different pressure levels, respectively. The pressure levels herein are set to Level 1, Level 2, Level 3, Level 4...Level N. The pressure value intervals, the pressure levels corresponding to the pressure value intervals and the pate turning speeds can be set by the user himself or can be the preset values of the device.

When the detected pressure value meets the condition of P≤P1, the pressure level is set to be Level 1 at the moment and the corresponding page turning speed is L1. That is, when the user's touch pressure on the screen is less than or equal to P1, every time the user taps the screen, L1 pages will be turned for the picture-text.

When the detected pressure value meets the condition of P1<P≤P2, the pressure level is set to be Level 2 at the moment and the corresponding page turning speed is L2. That is, when the user's touch pressure on the screen is less than or equal to P2 but greater than P1, every time the user taps the screen, L2 pages will be turned for the picture-text.

When the detected pressure value meets the condition of P2<P≤P3, the pressure level is set to be Level 3 at the moment and the corresponding page turning speed is L3. That is, when the user's touch pressure on the screen is less than or equal to P3 but greater than P2, every time the user taps the screen, L3 pages will be turned for the picture-text.

When the detected pressure value meets the condition of P3<P≤P4, the pressure level is set to be Level 4 at the moment and the corresponding page turning speed is L4. That is, when the user's touch pressure on the screen is less than or equal to P3 but greater than P2, every time the user taps the screen, L4 pages will be turned for the picture-text.

When the user's touch pressure on the screen is greater than the set maximum pressure value P4, the operation of selecting a page turning speed will be stopped at the moment, the chapter directory of picture-text will be obtained directly, and the switching operation can be performed directly at the chapter level.

For example, P1, P2, P3, and P4 are set to correspond to Level 1, Level 2, Level 3 and Level 4, respectively, and the page turning speed corresponding to each level is 1 page, 5 pages, 10 pages, or 15 pages, every time, respectively.

In the present embodiment, the division of the pressure value intervals into 5 levels is only an example, and other numbers of levels may be set according to the user's preference, the accuracy of the pressure sensor and the like. For another example, the highest level is set to switch to the chapter level when the detected pressure is higher than a certain pressure. Other similar settings may be performed, and the embodiments of the present invention are not limited thereto.

In other embodiments, when the media is another form of media such as a document, a web page, an instant message, social communication information, an audio, a video, or a picture, the media presentation position change amount is determined according to the specific situation. Some typical cases have been described in the specification and will not be repeated here. Those skilled in the art can understand that, in those cases, the correspondence between the corresponding pressure value intervals and media presentation position change amounts may be similarly set in the manner shown in FIG. 3.

Reference could be made to FIG. 4 which is a schematic diagram of a correspondence between pressure values and media presentation position change amounts according to another embodiment of the present invention. In the schematic diagram, taking the page turning of an e-book as an example, the media presentation position change amount is specifically the number of turned pages of the e-book. As shown in FIG. 4, in the present embodiment, the pressure value intervals will not be set, but the numbers of turned pages (L) and the detected pressure values (N) acting on the touch device by the user are set in a continuously-changing relationship. The correspondence between the pressure values and the numbers of turned pages herein may be linear or non-linear. As shown in FIG. 4, the user's pressure change trend is continuous, and the corresponding change in the number of turned pages is also continuous or substantially continuous. For example, the number of turned pages may continuously change from 1 to S, where S may be a preset larger number of pages and may be set by the system or by the user. S may be set according to user's preference or may be set according to the maximum number of pages or the number of remaining pages of the e-book.

In the case of a simple correspondence, the number of turned pages corresponding to the maximum pressure value PN may be set by the user or may not be preset, and the device may save a preset maximum number of turned pages. The so-called "maximum pressure value" refers to a pressure large enough that a user's finger or a touch device commonly used by a user, such as a touch pen, usually can apply.

When the user's touch pressure on the screen is greater than the set maximum pressure value PN, the operation of determining a page turning speed can be stopped at the moment, and the chapter directory of picture-text is obtained directly, that is, the operation of directly switching to the chapter level can be performed for the user to select a desired page in the chapter directory.

In other embodiments, when the media is another form of media such as a document, a web page, an instant message, social communication information, an audio, a video, or a picture, the media presentation position change amount is determined according to the specific situation. Some typical cases have been described in the specification and will not be repeated here. Those skilled in the art can understand that, in those cases, the correspondence between the corresponding pressure values and media presentation position change amounts may be similarly set in the manner shown in FIG. 4.

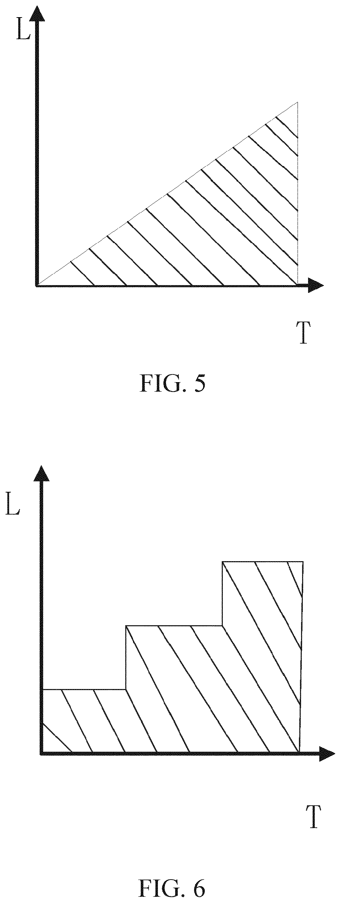

Reference could be made to FIG. 5 which is a schematic diagram of an operation of determining a presentation position change amount based on a presentation position change speed and pressure duration according to yet another embodiment of the present invention.

In the present embodiment, the presentation position change amount may be determined according to the presentation position change speed and the pressure duration in, but not limited to, the following way: when the pressure values are in the same pressure value interval within the pressure duration, it is determined that the presentation position change amount is a product of the presentation position change speed and the pressure duration.

The schematic diagram 5 takes the page turning of an e-book as an example. That is, the media presentation position change amount is specifically the number of turned pages of the e-book. The media presentation position change speed is the page turning speed of the e-book. As shown in FIG. 5, in the present embodiment, the actually detected pressure is represented by P, and different pressure values such as P1, P2, P3, P4, and PN are set (where P1<P2<P3<P4<...<PN.), the page turning speed is denoted by L, and L1, L2, L3, L4... LN respectively indicate page turning speeds under different pressure levels. When the detected pressure value meets the condition of P≤P1, the pressure level is set to be Level 1 at the moment and the corresponding page turning speed is L1. When the detected pressure value meets the condition of P1<P≤P2, the pressure level is set to be Level 2 at the moment and the corresponding page turning speed is L2. When the detected pressure value meets the condition of P2<P≤P3, the pressure level is set to be Level 3 at the moment and the corresponding page turning speed is L3. When the detected pressure value meets the condition of P3<P≤P4, the pressure level is set to be Level 4 at the moment and the corresponding page turning speed is L4, and the rest can be done in the same manner. As shown in FIG. 5, the duration T of the abscissa indicates the pressing time for which the user remains on the screen.

In the present embodiment, when the user touches the screen, first the magnitude of the strength applied to the screen by the user is sensed by the pressure sensor, and then which value range the sensed strength falls in is determined, thereby determining the corresponding level and page turning speed. At the moment, the user's finger stays on the screen and starts recording the time T that the user stays on the screen. The final resultant number of turned pages M=L×T. In FIG. 5, the number of turned pages can be represented by an area encircled by the page turning speed and the duration.

For example, as set in FIG. 5, when the user touches the screen with a strength (P1<P≤P2), the corresponding pressure level is Level 2, and the corresponding page turning speed is 5 pages, and if the time that the user's figure stays on the screen is 5s at the moment and when the user's finger is removed from the screen, the achieved number of turned pages is calculated as 5×5=25, which is the product of the page turning speed and the time. The method for realizing the product of a page turning speed and a time can be implemented by software, such as table look-up, calculation, difference, and the like. On the other hand, it can also be implemented by hardware, for example, by inputting the detected pressure or the electrical signal converted therefrom into an integrator or the like.

When the user's touch pressure on the screen is greater than the set maximum pressure value P4, the operation of determining a page turning speed can be stopped at the moment, and the chapter directory of the picture-text is obtained directly, that is, the operation of directly switching to the chapter level can be performed for the user to select a desired page in the chapter directory.

In other embodiments, when the media is another form of media such as a document, a web page, an instant message, social communication information, an audio, a video, and a picture, the media presentation position change amount is determined according to the specific situation. Some typical cases have been described in the specification and will not be repeated here. Those skilled in the art can understand that, in those cases, the integration of the corresponding media presentation position change speed over time may be similarly determined in the manner shown in FIG. 5.

Reference could be made to FIG. 6 which is a schematic diagram of an operation of determining a presentation position change amount based on a presentation position change speed and pressure duration according to yet another embodiment of the present invention. In the present embodiment, the presentation position change amount may be determined according to the presentation position change speed and the pressure duration in, but not limited to, the following way: when the pressure value changes in different pressure value intervals within the pressure duration, for each pressure value interval, a product of the presentation position change speed corresponding to the pressure value interval and the duration corresponding to the pressure value interval is calculated; then, all the above products are accumulated and the accumulation result is used as the presentation position change amount.

In the schematic diagram 6, by taking the page turning of an e-book as an example, herein the media presentation position change amount is the number of turned pages of the e-book. As described in the embodiment shown in FIG. 6, when the user touches the screen, the magnitude of the strength applied to the screen by the user is sensed by the pressure sensor, and which value range the sensed strength falls in is then determined, thereby determining the corresponding level and page turning speed. At the moment, the user's finger stays on the screen and starts recording the time T that the user stays on the screen. The final resultant number of turned pages M=L×T. In the present embodiment, if the user wishes to change the page turning speed to increase or decrease the change speed of the number of turned pages, the strength applied to the touch screen can be changed to switch to the page turning speeds corresponding to different strength levels, and the total number of turned pages at the moment is calculated according to the equation of M=L1×T1+L2×T2+L3×T3+...+LN×TN. That is, the total number of turned pages is the sum of the products of the respective page turning speeds corresponding to the different pressure value intervals multiplied by the respective corresponding durations corresponding to the different pressure value intervals. For example, when the user touches the screen with a strength (P1<P≤P2), the corresponding pressure level is Level 2, the corresponding page turning speed is 5 pages, and the time that the user's figure stays on the screen is 5s. If the user wants to change the change speed of the number of turned pages at the moment, the strength applied to the touch screen is changed as P2<P≤P3. At the moment, the corresponding pressure level is Level 3, the corresponding page turning speed is 10 pages, and the user's figure stays on the screen for 7s thereafter, and then the number of pages turned by the user in the whole process is calculated as 5×5+10×7=95.

When the user's touch pressure on the screen is greater than the set maximum pressure value P4, the operation of determining a page turning speed can be stopped at the moment, and the chapter directory of the picture-text is obtained directly, that is, the operation of directly switching to the chapter level can be performed for the user to select a desired page in the chapter directory.

In other embodiments, when the media is another form of media such as a document, a web page, an instant message, social communication information, an audio, a video, and a picture, the media presentation position change amount is determined according to the specific situation. Some typical cases have been described in the specification and will not be repeated here. Those skilled in the art can understand that, in those cases, the integration of the corresponding media presentation position change speed over time may be similarly determined in the manner shown in FIG. 6.

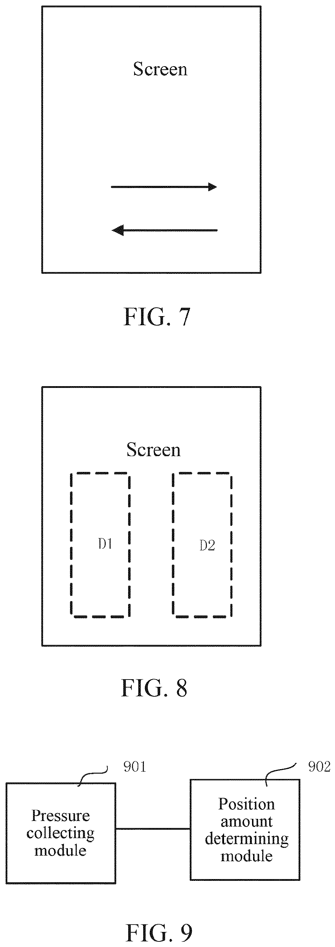

Reference could be made to FIG. 7 which is a schematic diagram of a pressure acting direction according to yet another embodiment of the present invention. As shown in FIG. 7, said detecting the pressure direction refers to detecting a user's sliding trajectory acting on the touch device, and turning the page forward and backward can be implemented by detecting the pressure direction. If it is detected that the sliding trajectory of the finger on the touch device is from left to right, the page is turned forward; if it is detected that the sliding trajectory of the finger on the touch device is from right to left, the page is turned backward.

In the present embodiment, it is not limited to the left and right sliding of the finger trajectory, and turning the page forward and backward can also be implemented by sliding up and down on the touch device.

In the present embodiment, when the pressure direction is combined with the pressure value, it is possible to achieve turning forward with a certain number of turned pages and acting forward with a certain number of turned pages. Similarly, in the present embodiment, when the pressure direction is combined with the pressure value and the pressure duration, it is also possible to achieve turning forward with a certain number of turned pages and turning backward with a certain number of turned pages. It can be combined with the embodiments in the previous FIGs 3, 4, 5 and 6, which will not be described here.

In the present embodiment, it is possible to select which direction to slide in according to the presentation mode of the media. For example, when the media is a web page, the mode of sliding up and down may be selected; when the media is an e-book of which the pages are turned left and right, the mode of sliding left and right may be selected.

Reference could be made to FIG. 8 which is a schematic diagram of a pressure acting region according to yet another embodiment of the present invention. As shown in Fig. 8, the device screen can be divided into different pressure acting regions, D1 and D2. The pressure acting regions D1 and D2 herein may be located at the upper and lower parts, left and right parts or in other specific regions; D1 and D2 may be continuous or discontinuous with each other, that is, the two regions may be adjacent or not adjacent each other; the areas of D1 and D2 may be equal or not equal, that is, the left region may be set larger or the right region may be set larger according to user's preference or one-handed operation habit; D1 and D2 may also be displayed on the screen in the form of a fixedly-set key, or is set invisibly on the screen, that is, the key appears only when a signal of touching with a human hand or approaching to the screen is received. The situations are similar in the case where the pressure acting regions D1 and D2 are located at the upper and lower parts and the case where the pressure acting regions D1 and D2 are located in other specific regions. When the pressure acting regions D1 and D2 on the screen are not adjacent each other, other different functions can be achieved in the left blank region. When the user touches the screen D1, the picture-text can be turned backward; when the user touches the screen D2, the page can be turned forward.

As in the embodiments described in FIG. 3, FIG. 4, FIG. 5, and FIG. 6, when the user touches different regions to achieve the effect of turning the page backward and the effect of turning the page backward, the device can also detect the pressure value applied when the user touches the screen and the pressure duration, thus achieving turning forward with a certain number of turned pages and turning backward with a certain number of turned pages.

Reference could be made to FIG. 9 which is a structural block diagram of an apparatus according to another embodiment of the present invention. As shown in the figure, the apparatus includes a pressure collecting module 901 and a position amount determining module 902.

The pressure collecting module 901 is configured to detect a pressure value acting on a touch device.

The pressure collecting module 901 is mainly configured to detect the magnitude of strength applied when a user or another device that can be perceived touches the screen. For example, for a mobile phone terminal equipped with a pressure screen, when the user's finger presses the screen of the mobile phone, the pressure sensor will present the entire touch process to the processing chip, and the processing chip can determine whether the touch is a tap or a heavy press and can measure the pressure value of the press. The detection includes real-time detection and non-real-time detection, herein real-time detection means that the latest pressure value is always detected as long as the pressure termination signal is not received. In that case, the media presentation position change amount is determined according to the detected latest pressure value or determined according to the detected latest pressure value in combination with the previously detected pressure values. Non-real-time detection means that the pressure value is detected only once, and if the subsequent pressure value changes, the change in the subsequent pressure value is no longer detected. In that case, the media presentation position change amount is determined only based on the detected pressure value, and changes in subsequent pressure values will cause no change in the presentation position change amount.

A position amount determining module 902 is configured to determine a presentation position change amount of the media according to the detected pressure value.

The position amount determining module 902 is mainly configured to achieve rapid presentation of the media based on the fact that different pressure values acting on the touch device by the user correspond to different media presentation position change amounts. Here, the method for the correspondence between pressure values and media presentation position change amounts may be that different pressure intervals correspond to different presentation position change amounts, or different pressure values correspond to different presentation position change amounts.

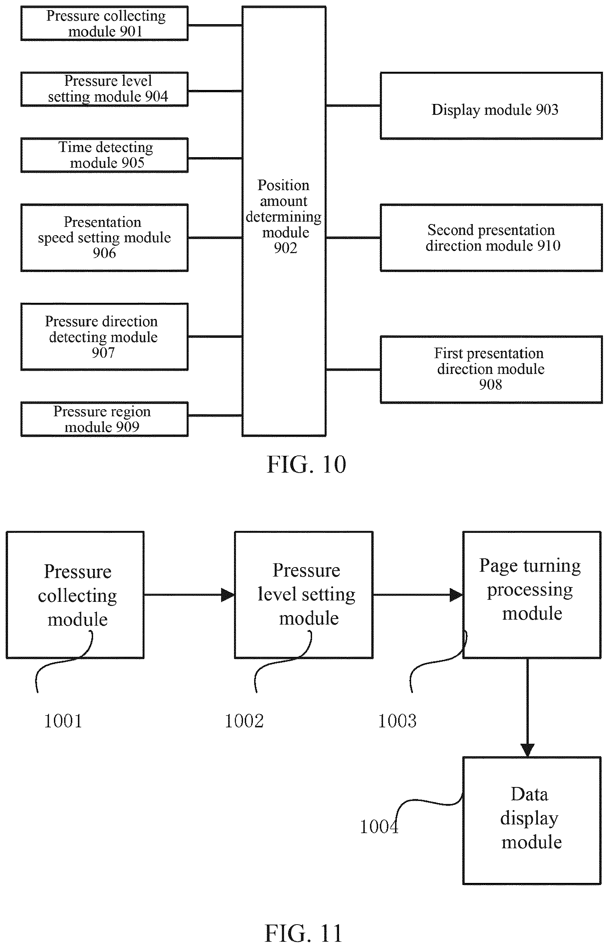

In the embodiment, as shown in FIG. 10, the apparatus may further include:
a display module 903, configured to display the presentation position change amount or to play the presentation position change amount in a voice manner.

In the embodiment, the apparatus may further include:
a pressure level setting module 904, configured to set numbers of turned pages corresponding to different pressure value intervals to form a correspondence between pressure value intervals and presentation position change amounts.

Herein, the position amount determining module 902 is configured to: determine a pressure value interval into which the pressure value falls, and determine the presentation position change amount according to the correspondence between pressure value intervals and presentation position change amounts.

In the embodiment, the presentation position change amounts and the detected pressure values may have a continuously-changing correspondence.

In the embodiment, the apparatus may further include:
a time detecting module 905, configured to detect the duration of the pressure acting on the touch device.

Herein, the position amount determining module 902 is configured to determine the presentation position change amount jointly based on the pressure value and the pressure duration.

In the embodiment, the apparatus may further include:
a presentation speed setting module 906, configured to set presentation position change speeds corresponding to different pressure value intervals to form a correspondence between the pressure value intervals and the presentation position change speeds.

Herein, the position amount determining module 902 determines the presentation position change amount jointly based on the pressure value and the pressure duration in the following way:
determining in real time a pressure value interval into which the pressure value falls;
determining in real time a presentation position change speed according to the correspondence between the pressure value intervals and the presentation position change speeds;
determining the presentation position change amount according to the presentation position change speed and the pressure duration.

In the embodiment, the position amount determining module 902 may determine the presentation position change amount according to the presentation position change and the pressure duration in the following way:
when the pressure values are in the same pressure value interval within the pressure duration, determining the presentation position change amount to be a product of the presentation position change speed and the pressure duration;
when the pressure values change in different pressure value intervals within the pressure duration, for each pressure value interval, calculating a product of the presentation position change speed corresponding to a pressure value and the duration corresponding to the pressure value, and then accumulating all the above products and using the accumulation result as the presentation position change amount.

In the embodiment, the apparatus may further include:
a pressure direction detecting module 907, configured to detect a pressure acting direction acting on the touch device; and
a first presentation direction module 908, configured to determine a presentation direction according to the pressure direction, and perform the presentation according to the presentation direction and the presentation position change amount.

In the embodiment, the apparatus may further include:
a pressure region module 909, configured to detect the pressure acting region acting on the touch device; and
a second presentation direction module 910, configured to determine a presentation direction according to the pressure acting region, and perform page turning according to the presentation direction and the presentation position change amount.

The apparatus for controlling media presentation according to the present invention is further described below with reference to specific examples.

Reference could be made to FIG. 11 which is a schematic diagram of an apparatus for controlling media presentation according to yet another embodiment of the present invention. In the schematic diagram, taking page turning of an e-book as an example, that is, the media presentation position change amount is specifically the number of turned pages of the e-book. As shown in FIG. 11, the apparatus for achieving turning pages of picture-text by using a pressure sensor includes a pressure collecting module 1001, a pressure level setting module 1002, a page turning processing module 1003, and a data display module 1004.

The pressure collecting module 1001 is mainly configured to collect the magnitude of the strength applied when the user touches the screen.

For example, for a mobile phone terminal equipped with a pressure screen, when the user's finger presses the screen of the mobile phone, the pressure sensor will present the entire touch process to the processing chip, and the processing chip can determine whether the touch is a tap or a heavy press and can measure the pressure value of the press.

The pressure level setting module 1002 is mainly configured to set pressure values detected by the pressure collecting module into different levels.

Different pressure levels may be preset by the pressure level setting module, and when receiving a detected user touch pressure value, the pressure level setting module determines at which pressure level the pressure value is.

The page turning processing module 1003 sets page turning speeds corresponding to the pressure levels in the pressure level setting module 1002.

When receiving a pressure level transmitted by the pressure level setting module 1002, the page turning processing module 1003 calls a page turning speed corresponding to the pressure level. The page turning speed may be set by default on the device, or may be a page turning speed defined by the user.

It should be noted that, in the present embodiment, the function implemented by the page turning processing module 1003 may be a functional example of the position amount determining module.

The data display module 1004 is mainly configured to display the current page turning speed on the device screen for the user to acquire the current page turning speed from the device screen.

In the present embodiment, the data display module may display data on a mobile phone to the user in the form of a text, image, voice, or the like.

It should be noted that, in the present embodiment, the function implemented by the data display module 1004 may be a functional example of the display module.

In other embodiments, when the media is another form of media such as a document, a web page, an instant message, social communication information, an audio, a video, and a picture, the media presentation position change amount is determined according to the specific situation. Some typical cases have been described in the specification and will not be repeated here. Those skilled in the art can understand that, in those cases, a corresponding apparatus for controlling media presentation may be similarly determined in the manner shown in FIG. 11.

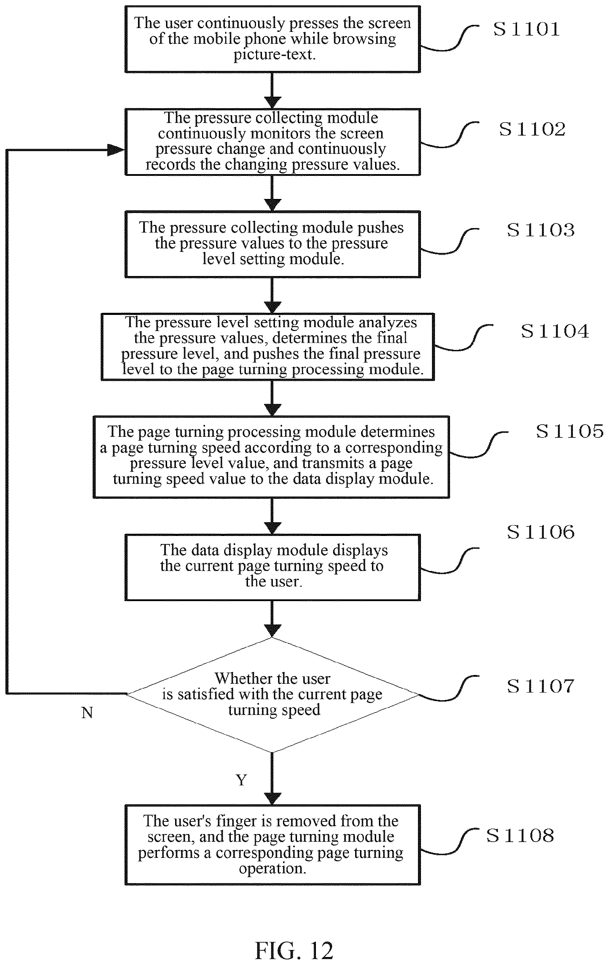

Reference could be made to FIG. 12 which is a flowchart of a method for controlling media presentation according to another embodiment of the present invention. In the flowchart, taking the page turning of an e-book as an example, that is, the media presentation position change amount is specifically the number of turned pages of the e-book. As shown in Figure 12, the process includes following steps.

In step S1101, the user continuously presses the screen of the mobile phone while browsing picture-text.

In the step, the user browses picture-text by pressing the screen.

In step S1102, the pressure collecting module continuously monitors the screen pressure change and continuously records the changing pressure values.

In the step, because the user's finger presses the device screen for a long time, a continuous pressure is generated on the screen. At the moment, the pressure collecting module will record and monitor the pressure values acting on the device screen.

In step S1103, the pressure collecting module pushes the pressure values to the pressure level setting module.

In the step, when the pressure collecting module detects a pressure value applied by the user to the screen, it is to proceed to step S1104.

In step S1104, the pressure level setting module analyzes the pressure values, determines the final pressure level corresponding to the pressure value interval, and pushes the final pressure level to the page turning processing module.

In the step, the pressure level setting module presets pressure levels corresponding to different pressure value intervals, and according to the pressure value transmitted by the pressure collecting module, determines that the pressure value falls in a corresponding pressure level of which pressure value interval, and transmits the determined pressure level to the page turning processing module.

In step S1105, the page turning processing module determines a page turning speed according to a corresponding pressure level value, and transmits a page turning speed value to the data display module.

In the page turning processing module, different page turning speeds are determined corresponding to different pressure levels. When the page turning processing module receives the pressure level value transmitted by the pressure level setting module, the corresponding turning speed can be determined, and the page turning speed is transmitted to the data display module.

In step S1106, the data display module displays the current page turning speed to the user.

In the step, after receiving the page turning speed value transmitted by the page turning processing module, the data display module displays the page turning speed value on the device for the user to acquire the current page turning speed. The page turning speed value may be display in the form of a text, graph, voice, video, and so on.

In step S1107, the user determines whether the current page turning speed is satisfied.

In the step, the user will determine whether the current page turning speed is satisfied according to the page turning speed displayed by the data display module. If the current page turning speed is not satisfied, it is to return to step S1102; if the current page turning speed is satisfied, it is to proceed to step S1108.

In step S1108, the user's finger is removed from the screen, and the page turning module performs a corresponding page turning operation.

In the step, when the user is satisfied with the page turning speed displayed by the data display module, the finger will be removed from the screen of the device. At the moment, the device will perform an operation corresponding to the last page turning speed displayed on the screen before the finger is removed.

In other embodiments, when the media is another form of media such as a document, a web page, an instant message, a social communication message, an audio, a video, and a picture, the media presentation position change amount is determined according to the specific situation. Some typical cases have been described in the specification and will not be repeated here. Those skilled in the art can understand that, in those cases, a corresponding flow of the method for controlling media presentation may be similarly determined in the manner shown in FIG. 12.

According to an embodiment of the present invention, a terminal device is further provided, including the above-mentioned apparatus for controlling media presentation. The terminal device may include multiple forms and the embodiments of the present invention are not limited thereto. The related description has been presented in the specification, which is not repeated here.

An embodiment of the present invention further provides a computer readable storage medium storing computer-executable instructions which, when executed, implement a method for controlling media presentation.

The method and apparatus for controlling media presentation disclosed in the embodiments of the present invention have been described above in detail. Specific examples are used herein to describe the principle and implementations of the present application. The above description of the embodiments is only used to help to understand the method of the present application and its core concept. Moreover, for those skilled in the art, based on the concept of the present application, there will be changes in the specific embodiments and application scope. In summary, the content of the present specification should not be understood as being intended to limit the present application.

The ordinary skilled in the art should understand that all or part of steps of the above-mentioned methods may be completed by programs instructing relevant hardware (e.g., a processor), and the programs may be stored in a computer readable storage medium, such as a read-only memory, a magnetic disk or CD. Alternatively, all or part of the steps of the embodiments described above may also be implemented using one or more integrated circuits. Correspondingly, each module/unit in the above embodiments may be implemented in the form of hardware, for example to achieve its corresponding function through an integrated circuit, or may be implemented in the form of a software functional module, for example, to achieve its corresponding function by executing programs/instructions stored in a storage by virtue of a processor. The application is not limited to any particular form of a combination of hardware and software. The ordinary skilled in the art should understand that the scheme of the present application may be modified or equivalently replaced without departing from the essence and scope of the scheme of the present application, and all should be covered within the scope of the claims of the present application.

### Industrial Applicability

According to the above-mentioned scheme, the media presentation position change can be conveniently controlled through touch actions with different strengths, without additional operations on the scroll bar, the play progress bar, etc., and without a large number of touches by a user.

## Claims

1. A method for controlling media presentation, comprising:
detecting a pressure value acting on a touch device; and
determining a presentation position change amount of a media based on the detected pressure value.

2. The method for controlling media presentation according to claim 1, further comprising:
displaying the presentation position change amount or playing the presentation position change amount in a voice manner.

3. The method for controlling media presentation according to claim 1, wherein before detecting a pressure value acting on a touch device, the method further comprises:
setting presentation position change amounts corresponding to different pressure value intervals to form a correspondence between pressure value intervals and presentation position change amounts,
wherein said determining the presentation position change amount of the media based on the detected pressure value comprises: determining a pressure value interval into which the pressure value falls, and determining the presentation position change amount based on the correspondence between pressure value intervals and presentation position change amounts.

4. The method for controlling media presentation according to claim 1, wherein
the presentation position change amounts and the detected pressure values have a continuously-changing correspondence.

5. The method for controlling media presentation according to claim 1, wherein the method further comprises:
detecting a duration of the pressure acting on the touch device,
wherein said determining the presentation position change amount based on the detected pressure value comprises: determining the presentation position change amount jointly based on the pressure value and the pressure duration.

6. The method for controlling media presentation according to claim 5, wherein before detecting a pressure value acting on a touch device, the method further comprises:
setting presentation position change speeds corresponding to different pressure value intervals to form a correspondence between pressure value intervals and presentation position change speeds,
wherein said determining the presentation position change amount jointly based on the pressure value and the pressure duration comprises:
determining in real time a pressure value interval into which the pressure value falls;
determining in real time a presentation position change speed based on the correspondence between the pressure value intervals and the presentation position change speeds;
determining the presentation position change amount based on the presentation position change speed and the pressure duration.

7. The method for controlling media presentation according to claim 6, wherein said determining the presentation position change amount based on the presentation position change speed and the pressure duration comprises:
when the pressure values are in a same pressure value interval within the pressure duration, determining the presentation position change amount to be a product of the presentation position change speed and the pressure duration;
when the pressure values change in different pressure value intervals within the pressure duration, for each pressure value interval, calculating a product of the presentation position change speed corresponding to the pressure value interval and the duration corresponding to the pressure value interval, and then accumulating all the above products and using an accumulation result as the presentation position change amount.

8. The method for controlling media presentation according to claim 1, wherein the method further comprises:
detecting a pressure acting direction acting on the touch device;
determining a presentation direction based on the pressure acting direction; and
performing presentation based on the presentation direction and the presentation position change amount.

9. The method for controlling media presentation according to claim 1, wherein the method further comprises:
detecting a pressure acting region acting on the touch device;
determining a presentation direction based on the pressure acting region; and
performing presentation based on the presentation direction and the presentation position change amount.

10. The method for controlling media presentation according to claim 1, wherein after determining the presentation position change amount, the method further comprises:
when detecting that the pressure acting on the touch device disappears, determining a new presentation position of the media based on the presentation position change amount.

11. The method for controlling media presentation according to claim 1, wherein the media comprises an e-book, and the presentation position change amount comprises a number of turned pages of the e-book.

12. The method for controlling media presentation according to claim 1, wherein the media comprises any one or more of a document, a web page, an instant message, and social communication information, and the presentation position change amount comprises an amount of information skipped over when viewing the media forward or backward.

13. The method for controlling media presentation according to claim 1, wherein the media comprises any one of an audio and a video, and the presentation position change amount comprises a forward or backward amount of any one of the video and the audio.

14. The method for controlling media presentation according to claim 1, wherein the media comprises a picture, and the presentation position change amount comprises a number of pictures skipped over when viewing the pictures forward or backward.

15. An apparatus for controlling media presentation, comprising:
a pressure collecting module, configured to detect a pressure value acting on a touch device; and
a position amount determining module, configured to determine a presentation position change amount of a media based on the detected pressure value.

16. The apparatus for controlling media presentation according to claim 15, further comprising:
a display module, configured to display the presentation position change amount or to play the presentation position change amount in a voice manner.

17. The apparatus for controlling media presentation according to claim 15, further comprising:
a pressure level setting module, configured to set numbers of turned pages corresponding to different pressure value intervals to form a correspondence between pressure value intervals and presentation position change amounts,
wherein the position amount determining module is configured to determine a pressure value interval into which the pressure value falls, and determine the presentation position change amount based on the correspondence between pressure value intervals and presentation position change amounts.

18. The apparatus for controlling media presentation according to claim 15, wherein
the presentation position change amounts and the detected pressure values have a continuously-changing correspondence.

19. The apparatus for controlling media presentation according to claim 15, wherein the apparatus further comprises:
a time detecting module, configured to detect a duration of the pressure acting on the touch device,
wherein the position amount determining module is configured to determine the presentation position change amount jointly based on the pressure value and the pressure duration.

20. The apparatus for controlling media presentation according to claim 19, wherein the apparatus further comprises:
a presentation speed setting module, configured to set presentation position change speeds corresponding to different pressure value intervals to form a correspondence between the pressure value intervals and the presentation position change speeds,
wherein the position amount determining module determines the presentation position change amount jointly based on the pressure value and the pressure duration in the following way:
determining in real time a pressure value interval into which the pressure value falls;
determining in real time a presentation position change speed based on the correspondence between the pressure value intervals and the presentation position change speeds;
determining the presentation position change amount based on the presentation position change speed and the pressure duration.

21. The apparatus for controlling media presentation according to claim 20, wherein the position amount determining module determines the presentation position change amount based on the presentation position change speed and the pressure duration in the following way:
when the pressure values are in a same pressure value interval within the pressure duration, determining the presentation position change amount to be a product of the presentation position change speed and the pressure duration;
when the pressure values change in different pressure value intervals within the pressure duration, for each pressure value interval, calculating a product of the presentation position change speed corresponding to a pressure value and the duration corresponding to the pressure value, and then accumulating all the above products and using an accumulation result as the presentation position change amount.

22. The apparatus for controlling media presentation according to claim 15, wherein the apparatus further comprises:
a pressure direction detecting module, configured to detect a pressure acting direction acting on the touch device;
a first presentation direction module, configured to determine a presentation direction based on the pressure direction and perform the presentation based on the presentation direction and the presentation position change amount.

23. The apparatus for controlling media presentation according to claim 15, wherein the apparatus further comprises:
a pressure region module, configured to detect a pressure acting region acting on the touch device;
a second presentation direction module, configured to determine a presentation direction based on the pressure acting region and perform page turning based on the presentation direction and the presentation position change amount.

24. A terminal device, comprising the apparatus for controlling media presentation according to claims 15-23.
